# EUROPÄISCHE PATENTSCHRIFT

(11) **EP 2 025 267 B1**
(45) Veröffentlichungstag und Bekanntmachung des Hinweises auf die Patenterteilung: **11.04.2012**
(21) Anmeldenummer: 08105010.6
(22) Anmeldetag: 11.08.2008
(51) Int. Cl.: A47J 31/36

(54) **Brühkammer aus Karbon**
Brew chamber made out of carbon fiber laminate
Chambre d'infusion en matière plastique renforcée de fibres de carbone

(30) Priorität: 14.08.2007 DE 102007038353
(43) Veröffentlichungstag der Anmeldung: 18.02.2009
(73) Patentinhaber: BSH Bosch und Siemens Hausgeräte GmbH, 81739 München (DE)
(72) Erfinder: Kramer, Siegmund, 83417, Kirchanschöring (DE); Mathes, Anton, 83364 Neukirchen am Teisenberg (DE)

(56) Entgegenhaltungen:
- WO-A-97/24052
- DE-A1-102007 016 545

## Beschreibung

Die Erfindung betrifft eine Brühgruppe einer Getränkebrühmaschine zur Zubereitung von kaffeebasierten Getränken, die für einen Wasserdruck von mindestens 4 bar, also auf die Zubereitung von Espresso ausgelegt ist. Sie betrifft außerdem einen Einsatz für eine Brühkammer einer Getränkebrühmaschine sowie die Brühmaschine selbst.

Für die Zubereitung eines aromatischen Espressos empfehlen Barristi einen Wasserdruck von 9 bar. Er wird in kommerziell betriebenen Espressomaschinen erreicht, weil deren druckbelastete Teile, insbesondere die Brühkammer, aus Metall, in der Regel aus verchromtem Messing, hergestellt sind. Gewöhnliche Kaffeevollautomaten für den privaten oder für den Bürogebrauch dagegen, die neben normalem Brühkaffee auch Espresso zubereiten, stellen diesen Druck in der Regel nicht zur Verfügung. Denn eine metallene Brühkammer würde einerseits die Herstellungskosten für derartige Maschinen in die Höhe treiben. Andererseits haben die metallenen Brühkammern eine hohe Wärmekapazität, so dass sie vor dem Bezug des ersten Getränkes aufgeheizt werden müssen, wenn das Getränk nicht zu kühl gezapft werden soll. Sind sie nicht ständig in Betrieb, kühlen sie zu schnell aus, so dass die später bezogenen Getränke ebenfalls zu kühl sind. Die Brühgruppen und insbesondere die Brühkammern gewöhnlicher Kaffeevollautomaten für den nicht kommerziellen Bereich bestehen daher in der Regel aus hoch belastbarem Kunststoff. Die für die Espressoherstellung gewünschten Drücke erreichen derartige Maschinen allerdings nicht.

Brühgruppen sind z.B. in den Dokumenten WO 97/24052 A und DE 10 2007 016 545 A1 beschrieben.

Es ist daher Aufgabe der Erfindung, in einen Kaffeevollautomaten einen Zubereitungsdruck für Espresso von über 5 bar zu ermöglichen.

Die Erfindung wird durch die Merkmale von Anspruch 1 definiert. Karbon bietet einerseits eine hohe Stabilität, so dass ein Druck von über 5 bar in der Brühkammer aufgebracht und über die Brühgruppe abgetragen werden kann. Neben der Brühkammer müssen also auch die die Brühgruppenmechanik tragenden Seitenwände bzw. Rahmen, die Verpresskolben, Auswerferkolben und die Auswerfermechanik dem hohen Druck standhalten. Alle diese Teile lassen sich aus Karbon fertigen. Dieses Material ist optisch eindeutig von herkömmlichem Kunststoff zu unterscheiden, so dass einem Benutzer z. B. beim Reinigen der Maschine ein sehr hochwertiger Eindruck ihres Innenlebens vermittelt wird.

Die Herstellung der gesamten Brühgruppe aus Karbon stellt einen erheblichen Aufwand da, der die Herstellungskosten der Brühgruppe in die Höhe treibt. Erfindungsgemäß ist zumindest die Brühkammer aus Karbon gefertigt. Sie stellt das zentrale Teil der Brühgruppe dar, in der der teure Werkstoff Karbon am effektivsten eingesetzt ist. Zudem kann Karbon als Material für die Brühkammer seinen weiteren Vorteil der geringen Wärmekapazität voll ausspielen: Nur ein geringer Teil der im Brühwasser enthaltenen Wärmeenergie geht für die Erwärmung einer Karbonbrühkammer verloren. Das Brühwasser kühlt also kaum merklich ab, so dass das bezogene Getränk die gewünschte hohe Temperatur behält. Im Gegensatz zu metallenen Brühkammern muss also eine Karbonbrühkammer nicht vorgewärmt werden.

Als Zubereitungsgerät für ein Lebensmittel muss ein Kaffeevollautomat auch den lebensmittelrechtlichen Bestimmungen genügen. Nach einer weiteren vorteilhaften Ausgestaltung der Erfindung sind daher zumindest die kaffeeberührten Flächen der Wärmekammer mit einer lebensmittelechten Beschichtung versehen. Die Beschichtung passiviert die Oberflächen des Karbons, so dass keine Reaktionen des kohlenstoffbasierten Materials mit den Säuren und Ölen des Kaffees möglich sind.

Die Brühkammer und mithin die Beschichtung sind während des Zubereitungsprozesses hohen thermischen und mechanischen Belastungen ausgesetzt. Nach einer alternativen Ausgestaltungsform der Erfindung kann die Brühkammer einen Einsatz aus einem lebensmittelechten Material, wie z. B. Edelstahl, enthalten. Ein Einsatz kann bei Verschleiß und Beschädigung leichter ausgetauscht werden, kann allerdings aufgrund seiner vollflächigen Abstützung in der Brühkammer eine geringe Wandstärke aufweisen. Auch aus Metall weist er damit eine geringe Wärmekapazität auf, so dass nur ein verschwindend geringer Anteil der Wärmeenergie des Brühwassers zu seiner Aufheizung erforderlich ist.

Auch ein Einsatz muss selbstverständlich eine gewisse Mindeststabilität aufweisen, damit er z. B. zu Reinigungszwecken beschädigungsfrei entnommen werden kann. Seine Wanddicke kann jedoch weiter reduziert werden, wenn er nach einer weiteren vorteilhaften Ausgestaltung der Erfindung dauerhaft mit der Brühgruppe verbunden ist. Dadurch können das Material für den Einsatz weiter reduziert, die Herstellungskosten verringert und seine Wärmekapazität weiter herabgesetzt werden.

Um die Kosten für den Einsatz des hochwertigen Materials Karbon zu reduzieren, können nach einer weiteren vorteilhaften Ausgestaltung der Erfindung die weiteren Bauteile der Brühgruppe in einem Schichtaufbau aus Karbon und einem Metall oder einer Metalllegierung bestehen. Als Metalle eignen sich z. B. Aluminium oder ähnliche leichte Materialien oder deren Legierungen. Dadurch kann bei gleicher Stabilität und Funktionalität eine Kostenreduktion durch die Materialeinsparung an Karbon erreicht werden.

Alternativ oder zusätzlich kann das Karbonmaterial eine räumliche Struktur aufweisen. Dadurch kann seine Stabilität erhöht und zugleich sein Materialaufwand verringert werden. Die räumliche Struktur, z. B. eine Bienenwabenform, kann dabei sowohl in einer Makro- als auch in einer Mikrostruktur, den so genannten Karbon-Nanotubes bestehen. Trotz gleich bleibender Stabilität kann dadurch ein noch geringeres Gewicht und eine noch geringere Wärmekapazität der Bauteile erreicht werden.

Nach einer weiteren vorteilhaften Ausgestaltung der Erfindung kann die Brühkammer außerdem über eine Wärmedämmung verfügen. Sie kann erforderlich sein, weil Karbon über eine gute Wärmeleitfähigkeit verfügt und damit Wärmeenergie aus der Brühkammer ableiten kann. Die Wärmedämmung kann als separate Schicht oder als Beschichtung aufgebracht sein. Dabei ist allerdings zwischen dem erzielbaren Dämmeffekt und demjenigen Energieaufwand abzuwägen, der für die Erwärmung der Dämmung erforderlich ist. Denn auch dafür fließt Wärmeenergie aus der Brühkammer ab.

Nicht beansprucht wird ein Einsatz für eine Brühkammer eines Kaffeevollautomaten, der aus Karbon besteht. Mit seiner Hilfe können auch herkömmliche Kaffeevollautomaten ausgerüstet werden, um sie widerstandsfähiger gegen die erheblichen Druck- und Temperaturbelastungen zu machen. Der Einsatz kann in der oben für die Brühkammer bzw. Brühgruppe beschriebenen Weise ausgebildet sein.

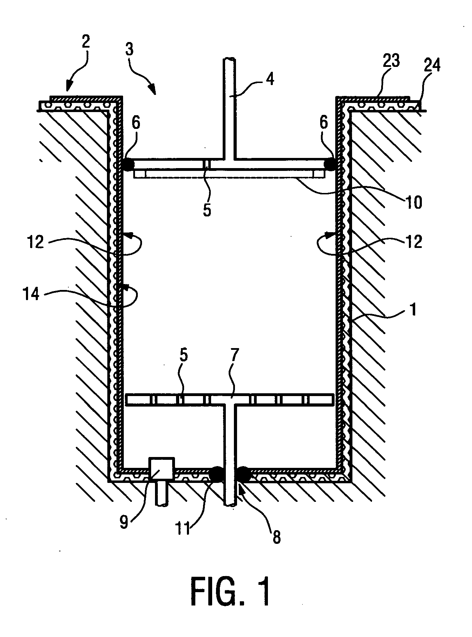

Das Prinzip der Erfindung wird im Folgenden anhand einer Zeichnung beispielshalber noch näher erläutert. In der Zeichnung zeigt Figur 1 schematisch und ausschnittsweise eine Brühkammer 1 einer Brühgruppe eines Kaffeevollautomaten. Sie enthält einen becherförmigen Einsatz 2, der der Form der Brühkammer 1 angepasst ist und sie vollständig auskleidet. Von deren offener Oberseite 3 aus ragt ein T-Kolben 4 in den Einsatz 2 hinein. Er ist von einer Durchlassöffnung 5 durchbrochen und mit einem O-Ring 6 an Innenflächen 12 des Einsatzes 2 abgedichtet. Der T-Kolben 4 trägt auf seiner der Oberseite 3 abgewandten Unterseite ein Sieb 10. Ein prinzipiell gleichartiger T-Kolben 7 ragt durch eine zentrale bodenseitige Öffnung 8 im Einsatz 2 dem T-Kolben 4 entgegen. Er weist mehrere Durchlassöffnungen 5 auf. Er ist an der bodenseitigen Öffnung 8 mit einem O-Ring 11 abgedichtet, gegenüber den Innenflächen 12 des Einsatzes 2 dagegen nicht. Ebenfalls bodenseitig, aber dezentral angeordnet ist außerdem ein Wassereinlass 9, der für die Brühwasserzufuhr in der Brühkammer 1 sorgt.

Der Einsatz 2 ist zweilagig aufgebaut: Er umfasst einen den Innenraum der Brühkammer 1 umschließenden Edelstahleinsatz 23 und einen die Brühkammer 1 auskleidenden Karboneinsatz 24. Der Edelstahleinsatz 23 bildet also die Innenflächen 12 der Brühkammer 1. Das Kaffeemehl kommt also ausschließlich mit dem Edelstahl des Einsatzes 23 in Kontakt. Ein Kontakt mit dem Karboneinsatz 24 ist ausgeschlossen. Dadurch wird vermieden, dass insbesondere der aufgebrühte Kaffee mit dem Material des Karboneinsatzes 24 reagieren kann. Der Edelstahleinsatz 23 stellt also lediglich eine Beschichtung der Innenflächen 14 des Karboneinsatzes 24 dar.

Für die Stabilität des Einsatzes 2 sorgt der Karboneinsatz 24. Er weist dafür eine räumliche Wabenstruktur auf, die ihm eine große Stabilität bei gleichzeitig geringem Materialaufwand verleiht. Zugleich erhält er dadurch eine geringe Wärmekapazität, so dass insbesondere das erste Brühwasser, das in die Brühkammer gelangt, nicht zu viel Energie für seine Erhitzung verliert.

Der Einsatz 2 ist entnehmbar ausgebildet, so dass er bei Verschleiß oder Beschädigung jederzeit ausgewechselt werden kann. Dadurch kann die Standzeit bzw. Lebensdauer des Kaffeevollautomaten gesteigert werden.

### Bezugszeichenliste

- 1: Brühkammer
- 2: Einsatz
- 3: Oberseite
- 4: T-Kolben
- 5: Durchlassöffnung
- 6: O-Ring
- 7: T-Kolben
- 8: Öffnung
- 9: Wassereinlass
- 10: Sieb
- 11: O-Ring
- 12: Innenfläche der Brühkammer 1
- 14: Innenfläche des Karboneinsatzes 24
- 23: Edelstahlbeschichtung
- 24: Karboneinsatz

## Patentansprüche

1. Brühgruppe einer Getränkebrühmaschine zur Zubereitung von kaffeebasierten Getränken, die für einen Wasserdruck von mindestens 4 bar ausgelegt ist, **dadurch gekennzeichnet, dass** Komponenten der Brühgruppe zumindest teilweise aus einem karbonbasierten Werkstoff bestehen, wobei zumindest die Brühkammer aus Karbon gefertigt ist.

2. Brühgruppe nach Anspruch 1 oder 2, **gekennzeichnet durch** eine lebensmittelechte Beschichtung (23) zumindest der kaffeeberührten Flächen (12) der Brühkammer (1).

3. Brühgruppe nach Anspruch 1 oder 2, **gekennzeichnet durch** einen Einsatz (2) in der Brühkammer (1), der ein lebensmittelechtes Material (23) umfasst.

4. Brühgruppe nach dem obigen Anspruch, **dadurch gekennzeichnet, dass** der Einsatz dauerhaft mit der Brühkammer verbunden ist.

5. Brühgruppe nach einem der obigen Ansprüche, **gekennzeichnet durch** einen Schichtaufbau der Bauteile der Brühgruppe aus Karbon und einem Metall oder einer Metalllegierung.

6. Brühgruppe nach einem der obigen Ansprüche, **dadurch gekennzeichnet, dass** das Karbonmaterial eine räumliche Struktur aufweist.

7. Brühgruppe nach einem der obigen Ansprüche, **gekennzeichnet durch** eine Wärmedämmung der Brühkammer.

8. Kaffeevollautomat mit einer Brühgruppe nach einem der Ansprüche 1 bis 7.

## Claims

1. Brewing unit of a beverage brewing machine for preparation of coffee-based beverages, which is designed for a water pressure of at least 4 bars, **characterised in that** the components of the brewing group consist at least partly of a carbon-based material, wherein at least the brewing chamber is made of carbon fibre.

2. Brewing unit according to claim 1, **characterised by** a foodstuffs-fast coating (23) at least of the surfaces (12) of the brewing chamber (1) contacted by coffee.

3. Brewing unit according to claim 1 or 2, **characterised by** an insert (2), which comprises foodstuffs-fast material (23), in the brewing chamber.

4. Brewing unit according to the preceding claim, **characterised in that** the insert is permanently connected with the brewing chamber.

5. Brewing unit according to any one of the preceding claims, **characterised by** a layer construction of the components of the brewing unit from carbon fibre and a metal or a metal alloy.

6. Brewing unit according to any one of the preceding claims, **characterised in that** the carbon-fibre material has a three-dimensional structure.

7. Brewing unit according to any one of the preceding claims, **characterised by** a thermal insulation of the brewing chamber.

8. Automatic coffee machine with brewing unit according to any one of claims 1 to 7.

## Revendications

1. Groupe d'infusion d'une machine à infusion de boissons pour la préparation de boissons à base de café, qui est conçu pour une pression d'eau d'au moins 4 bar, **caractérisé en ce que** des composants du groupe d'infusion sont au moins partiellement constitués d'un matériau à base de carbone, au moins la chambre d'infusion étant réalisée en carbone.

2. Groupe d'infusion selon la revendication 1, **caractérisé par** un revêtement apte au contact alimentaire (23) au moins des surfaces (12) en contact avec le café de la chambre d'infusion (1).

3. Groupe d'infusion selon la revendication 1 ou 2, **caractérisé par** un insert (2) dans la chambre d'infusion (1), qui comprend un matériau apte au contact alimentaire (23).

4. Groupe d'infusion selon la revendication précédente, **caractérisé en ce que** l'insert est relié en permanence avec la chambre d'infusion.

5. Groupe d'infusion selon l'une des revendications précédentes, **caractérisé par** une structure stratifiée des composants du groupe d'infusion composée de carbone et d'un métal ou d'un alliage métallique.

6. Groupe d'infusion selon l'une des revendications précédentes, **caractérisé en ce que** le matériau de carbone présente une structure spatiale.

7. Groupe d'infusion selon l'une des revendications précédentes, **caractérisé par** une isolation thermique de la chambre d'infusion.

8. Machine à café automatique avec un groupe d'infusion selon l'une des revendications 1 à 7.
